(19) Europäisches Patentamt / European Patent Office / Office européen des brevets

(11) **EP 3 375 933 A1**

(12) **EUROPEAN PATENT APPLICATION**
published in accordance with Art. 153(4) EPC

(43) Date of publication:
**19.09.2018 Bulletin 2018/38**

(21) Application number: **16864356.7**

(22) Date of filing: **11.11.2016**

(51) Int Cl.:
***D21C 9/18*** (2006.01)       ***C08B 11/12*** (2006.01)
***D21H 11/18*** (2006.01)

(86) International application number:
**PCT/JP2016/083550**

(87) International publication number:
**WO 2017/082395 (18.05.2017 Gazette 2017/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **13.11.2015 JP 2015223110**

(71) Applicant: **Nippon Paper Industries Co., Ltd.
Tokyo 114-0002 (JP)**

(72) Inventors:
• **MURAMATSU Riichi
  Tokyo 114-0002 (JP)**
• **SEMI Katsunori
  Tokyo 114-0002 (JP)**
• **SATO Shinji
  Tokyo 114-0002 (JP)**

(74) Representative: **Kuhnen & Wacker
Patent- und Rechtsanwaltsbüro PartG mbB
Prinz-Ludwig-Straße 40A
85354 Freising (DE)**

(54) **METHOD FOR DEHYDRATING DISPERSION OF CHEMICALLY MODIFIED PULP**

(57)    Provided is a method for dehydrating a dispersion of a chemically modified pulp (oxidized pulp, carboxymethylated pulp, or cationized pulp) obtained by chemically modifying a pulp feedstock, characterized by dehydrating the dispersion of a chemically modified pulp by means of a screw press.

EP 3 375 933 A1

**Description**

{Technical Field}

The present invention relates to a method for dehydrating a dispersion of a chemically modified pulp.

{Background Art}

Various useful new materials and devices are expected to be provided from nanotechnology, which is a technology that freely controls substances in a nanometer region, that is, on the scale of atoms or molecules. In particular, when fiber is thinned to an extreme degree, completely new physical properties not found in conventional fibers are created, and therefore, nano-order fibers (nanofibers) are attracting much attention. Application of this nanofiber is expected to realize, for example, a purification device having a high-performance filter which does not allow any fine foreign matter to pass therethrough, to realize high chemical fiber strength and high performance garment, and to be developed to improvement of fuel cell efficiency and the like.

A cellulose nanofiber is a fiber having a nano-level fiber diameter of 1000 nm or less and can be generally obtained by defibrating chemically modified cellulose fiber (hereinafter also referred to as "chemically modified pulp") by mechanical shearing force (Patent Literature 1). Regarding a process for producing cellulose nanofibers, various production processes including the production process described in Patent Literature 1 have been studied.

{Citation List}

{Patent Literature}

Patent Literature 1: JP-A 2008-1728

{Summary of Invention}

{Technical Problem}

However, since chemically modified pulp has very high affinity with water, the water retention of the chemically modified pulp is extremely higher than that of raw pulp. As a result, the dehydration is greatly impaired. For this reason, there is a problem that it is impossible to prepare a high concentration cellulose nanofiber dispersion. It is therefore an object of the present invention to provide a method for dehydrating a chemically modified pulp, which is liable to be redispersed in water, while increasing concentration of the chemically modified pulp. In addition, an object of the present invention is to significantly reduce a catalyst and inorganic salts remaining in a chemically modified pulp, which may cause troubles such as disturbance in defibration treatment and coloring and may lead to problems such as safety.

{Solution to Problem}

The present invention provides (1) to (6).

(1) A method for dehydrating a dispersion of a chemically modified pulp obtained by applying chemical modification treatment to a pulp raw material, the dispersion of the chemically modified pulp being dehydrated by a screw press.
(2) The method for dehydrating a dispersion of a chemically modified pulp according to (1), in which the chemically modified pulp has an amount of a carboxyl group of 0.6 mmol/g to 3.0 mmol/g based on a bone dry mass of the chemically modified pulp.
(3) The method for dehydrating a dispersion of a chemically modified pulp according to (1), in which the chemically modified pulp has a degree of carboxymethyl substitution of 0.01 to 0.50 per glucose unit of cellulose constituting the chemically modified pulp.
(4) The method for dehydrating a dispersion of a chemically modified pulp according to (1), in which the chemically modified pulp has a degree of cation substitution of 0.02 to 0.50 per glucose unit of cellulose constituting the chemically modified pulp.
(5) A process for producing a chemically modified pulp dehydrated product having a solid content of 5 to 30% by mass, which includes using the method for dehydrating according to any one of (1) to (4).
(6) A process for producing a cellulose nanofiber, which includes using, as a raw material, a chemically modified pulp dehydrated product dehydrated by the method for dehydrating according to any one of (1) to (4).

{Advantageous Effects of Invention}

According to the present invention, it is possible to provide a method for dehydrating a chemically modified pulp, which is liable to be redispersed in water, while increasing concentration of the chemically modified pulp.

{Description of Embodiments}

The present invention relates to a dehydration method characterized by dehydrating a chemically modified pulp with a screw press capable of continuous operation, and it is possible to increase the concentration of the chemically modified pulp. Further, a dehydrated product (dehydrated cake) in which the content of chemically modified pulp in a chemically modified pulp dispersion is 5 to 30% by mass, preferably 5 to 25% by mass, more preferably 5 to 20% by mass has good redispersibility. When the chemically modified pulp is dehydrated (compressed) by the screw press such that the amount of chemically modified cellulose in the dispersion is 5% by mass or more, preferably 7% by mass or more, a catalyst and inorganic salts remaining in the chemically modified pulp can be significantly reduced. When a large amount of various chemicals (such as catalyst, inorganic salt, and chlorine ion) used for modification remains in the pulp, many problems such as failure of nanoization (failure of defibration treatment) and coloration are likely to occur. There is also a possibility of causing environmental and biological influences and problems such as safety.

(Pulp raw material)

Examples of pulp raw materials for producing the chemically modified pulp include those derived from plant materials (e.g., wood, bamboo, hemp, jute, kenaf, farm wastes, cloth, pulp (softwood unbleached kraft pulp (NUKP), softwood bleached kraft pulp (NBKP), hardwood unbleached kraft pulp (LUKP), hardwood bleached kraft pulp (LBKP), softwood unbleached sulfite pulp (NUSP), softwood bleached sulfite pulp (NBSP), thermomechanical pulp (TMP), recycled pulp, waste paper and the like), animal materials (e.g., Ascidiacea), algae, microorganisms (e.g., acetic acid bacteria (Acetobacter)), microorganism-producing products and the like, and any of them can be used. Preferably used are cellulose fibers derived from plants or microorganisms, more preferably cellulose fibers derived from plants.

Among these pulp raw materials, use of bleached kraft pulp having brightness of 80% or more, bleached sulfite pulp having brightness of 80% or more, powdery cellulose, or microcrystalline cellulose powder is preferred from viewpoints of mass production and cost. Further, use of powdery cellulose and microcrystalline cellulose powder is especially preferred, because it is possible to produce a cellulose nanofiber dispersion having lower viscosity even if having high concentration.

Powdery cellulose is a rod-like particle of microcrystalline cellulose obtained by removing amorphous parts from wood pulp with an acid hydrolysis treatment, and pulverizing and sieving it. In the powdery cellulose, the degree of polymerization of cellulose is about 100 to 500, the crystallinity of powdery cellulose measured by X-ray diffraction is 70 to 90%, and the volume average particle size measured by a laser diffraction-type particle size distribution measuring apparatus is preferably 100 $\mu$m or less, more preferably 50 $\mu$m or less. By using powdery cellulose having the volume average particle size of 100 $\mu$m or less, a dispersion of cellulose nanofibers excellent in fluidity can be prepared. As the powdery cellulose used in the present invention, for example, a rod-like crystalline cellulose powder having a certain particle size distribution which is obtained by a method including subjecting a selected pulp to an acid hydrolysis treatment to obtain an undecomposed residue, and purifying, drying, pulverizing and sieving the residue, may be used, or a commercially available powdery cellulose such as KC FLOCK (registered trademark) (available from NIPPON PAPER CHEMICALS Corporation), CEOLUS (registered trademark) (available from ASAHI KASEI CHEMICALS Corporation), and AVICEL (registered trademark) (available from FMC Corporation) may also be used.

(Carboxymethylation)

When a carboxymethylated pulp is used as a chemically modified pulp in the present invention, the carboxymethylated pulp may be obtained by carboxymethylating any one of the pulp raw materials listed above by a known method, or may be commercially available. In either case, it preferably has a degree of carboxymethyl substitution of 0.01 to 0.50 per anhydrous glucose unit of the pulp. An example of a process for preparing such a carboxymethylated pulp is as follows. A pulp is used as a base material in a solvent consisting of water and/or a lower alcohol in an amount of 3 to 20 times the mass of the base material, specifically including water, methanol, ethanol, N-propyl alcohol, isopropyl alcohol, N-butanol, isobutanol, tert-butanol or the like alone or as a solvent mixture of two or more of them. When a lower alcohol is mixed, the proportion of the lower alcohol is 60 to 95% by mass. A mercerizing agent consisting of an alkali metal hydroxide is used in an amount of 0.5 to 20 molar equivalents per anhydrous glucose residue of the base material, specifically including sodium hydroxide or potassium hydroxide. The base material, solvent, and mercerizing agent are mixed to perform a mercerization process at a reaction temperature of 0 to 70°C, preferably 10 to 60°C, for a reaction period of 15 minutes to 8 hours, preferably 30 minutes to 7 hours. Then, a carboxymethylating agent is added in an amount of 0.05 to 10.0 molar equivalents per glucose residue to perform an etherification reaction at a reaction temperature of 30 to 90°C, preferably 40 to 80°C, for a reaction period of 30 minutes to 10 hours, preferably 1 hour to 4 hours.

(Carboxylation)

When a carboxylated (oxidized) pulp is used as a chemically modified pulp in the present invention, the carboxylated pulp (also referred to as oxidized pulp) can be obtained by carboxylating (oxidizing) any one of the pulp raw materials by a known method. During the carboxylation, the carboxyl group content is preferably adjusted to, but not specifically limited to, 0.6 to 3.0 mmol/g, more preferably 0.6 to 2.0 mmol/g, still more preferably 1.0 mmol/g to 2.0 mmol/g based on the bone dry mass of the anionically modified cellulose nanofiber.

An example of a carboxylation (oxidation) method includes oxidizing a pulp raw material using an oxidizing agent in water in the presence of a compound selected from the group consisting of an N oxyl compound, a bromide, an iodide or a mixture thereof. This oxidation reaction allows the primary hydroxyl group at the C6 position of the glucopyranose ring on the surface of the pulp to be selectively oxidized to give a pulp fiber having an aldehyde group and a carboxyl group (-COOH) or a carboxylate group (-COO-) on its surface. During the reaction, the concentration of the pulp is not specifically limited, but preferably 5% by mass or less.

An N-oxyl compound refers to a compound capable of generating nitroxyl radicals. Any N-oxyl compounds can be used so far as they promote an intended oxidation reaction. For example, they include 2,2,6,6-tetramethylpiperidin-1-oxy radical (TEMPO) and derivatives thereof (e.g., 4-hydroxy-TEMPO).

The amount of the N-oxyl compound used is not specifically limited so far as it is a catalytic amount enough to oxidize the pulp used as a raw material. For example, it is preferably 0.01 to 10 mmol, more preferably 0.01 to 1 mmol, still more preferably 0.05 to 0.5 mmol per gram of bone dry pulp. It is also preferably about 0.1 to 4 mmol/L relative to the reaction system.

The bromide refers to a compound containing bromine, examples of which include alkali metal bromides that can be ionized by dissociation in water. Similarly, the iodide refers to a compound containing iodine, examples of which include alkali metal iodides. The amount of the bromide or iodide used can be selected in a range that can promote the oxidation reaction. The total amount of the bromide and iodide is preferably, for example, 0.1 to 100 mmol, more preferably 0.1 to 10 mmol, still more preferably 0.5 to 5 mmol per gram of bone dry pulp.

Any known oxidizing agents can be used, including, for example, halogens, hypohalous acids, halous acids, perhalic acids or salts thereof, halogen oxides, peroxides and the like. Among them, sodium hypochlorite is preferred because it is inexpensive and has a low environmental impact. The suitable amount of the oxidizing agent used is preferably 0.5 to 500 mmol, more preferably 0.5 to 50 mmol, still more preferably 1 to 25 mmol, most preferably 3 to 10 mmol per gram of bone dry pulp, for example. It is also preferably 1 to 40 mol per mole of the N-oxyl compound, for example.

During the oxidation process of the pulp, the reaction efficiently proceeds even under relatively mild conditions. Thus, the reaction temperature is preferably 4 to 40°C, or may be room temperature around 15 to 30°C. As the reaction proceeds, the pH of the reaction solution is found to decrease because carboxyl groups are generated in the pulp. To ensure that the oxidation reaction efficiently proceeds, an alkaline solution such as an aqueous sodium hydroxide solution is preferably added to maintain the pH of the reaction solution in the order of 8 to 12, preferably 10 to 11. The reaction medium is preferably water because of easy handling, low likelihood of side reactions and the like.

The reaction period in the oxidation reaction can be appropriately set depending on the extent to which oxidation proceeds, typically in the order of 0.5 to 6 hours, for example, 0.5 to 4 hours.

In addition, the oxidation reaction may be performed in two stages. For example, the oxidized pulp obtained by filtration after the termination of a first stage reaction is oxidized again under the same or different reaction conditions so that efficient oxidation can be achieved while preventing the reaction from being inhibited by sodium chloride produced as a by-product during the first stage reaction.

Another example of a carboxylation (oxidation) method may include contacting a pulp raw material with an ozone-containing gas. This oxidation reaction allows the hydroxyl groups at least at the 2- and 6-positions of the glucopyranose ring to be oxidized and the cellulose chain to be cleaved. The ozone concentration in the ozone-containing gas is preferably 50 to 250 g/m$^3$, more preferably 50 to 220 g/m$^3$. The amount of ozone to be added to the pulp raw material is preferably 0.1 to 30 parts by mass, more preferably 5 to 30 parts by mass per 100 parts by mass of the solids content of the pulp raw material.

The ozonation temperature is preferably 0 to 50°C, more preferably 20 to 50°C. The ozonation period is not specifically limited, but in the order of 1 to 360 minutes, preferably 30 to 360 minutes. If the ozonation conditions are within these ranges, the pulp can be prevented from excessively oxidized and cleaved and an oxidized pulp can be obtained with good yield.

The ozonation may be followed by a post-oxidation using an oxidizing agent. The oxidizing agent used for the post-oxidation is not specifically limited, but may include chlorine compounds such as chlorine dioxide and sodium chlorite; and oxygen, hydrogen peroxide, persulfuric acid, peracetic acid and the like. For example, a post-oxidation can be performed by dissolving one of these oxidizing agents in water or a polar organic solvent such as an alcohol to prepare a solution of the oxidizing agent and immersing the pulp raw material in the solution.

The carboxyl group content of the oxidized pulp can be adjusted by controlling the reaction conditions such as the amount of the oxidizing agent added, the reaction period and the like described above.

(Cationization)

When a cationized pulp is used as a chemically modified pulp in the present invention, the cationically modified pulp can be obtained by reacting any one of the cellulose raw materials with a cationizing agent such as glycidyltrimethylammonium chloride, 3-chloro-2-hydroxypropyltrialkylammonium hydride or a halohydrin form thereof and an alkali metal hydroxide (sodium hydroxide, potassium hydroxide or the like) as a catalyst in the presence of water and/or an alcohol containing 1 to 4 carbon atoms. In this process, the degree of cationic substitution per glucose unit of the resulting cationically modified pulp can be adjusted by controlling the amount of the reactant cationizing agent added or the composition ratio of water and/or the alcohol containing 1 to 4 carbon atoms.

The degree of cationic substitution of the cationically modified pulp is preferably 0.02 to 0.50 per glucose unit. When a cationic substituent is introduced into pulps, the pulps electrically repel each other. Thus, the pulps into which a cationic substituent has been introduced can be readily defibrated into nanofibers. If the degree of cationic substitution is lower than 0.02 per glucose unit, they cannot be sufficiently defibrated into nanofibers. On the other hand, if the degree of cationic substitution is higher than 0.50 per glucose unit, they may be swollen or dissolved and may fail to form nanofibers.

(Esterification)

In the present invention, when a pulp into which a phosphate group has been introduced is used as the chemically modified pulp, examples of phosphate group-containing compounds in a pulp raw material include phosphoric acid, sodium dihydrogen phosphate, disodium hydrogen phosphate, trisodium phosphate, sodium pyrophosphate, sodium metaphosphate, potassium dihydrogen phosphate, dipotassium hydrogen phosphate, tripotassium phosphate, potassium pyrophosphate, potassium metaphosphate, ammonium dihydrogen phosphate, diammonium hydrogen phosphate, triammonium phosphate, ammonium pyrophosphate, and ammonium metaphosphate. The phosphate group can be introduced by using them alone or as a combination of two or more of them. As the ratio of the phosphate group-containing compound to the pulp raw material, the addition amount thereof is preferably 0.1 to 500 parts by mass, more preferably 1 to 400 parts by mass, still more preferably 2 to 200 parts by mass, in terms of phosphorus element, based on 100 parts by mass of the solid content of the pulp raw material.

(Dehydration Treatment)

In the present invention, the screw press is an apparatus constituted of a screw cylinder rotated by drive means, a screw blade spirally provided on an outer periphery of the screw cylinder, and a substantially cylindrical filtration tube surrounding the screw blade, an inlet portion and an outlet portion are provided at both ends of the filtration tube, a space portion surrounded by the screw cylinder, the screw blade, and the filtration tube is reduced from the inlet portion to the outlet portion, and a water-containing raw material charged from the inlet portion is squeezed and dehydrated to be discharged as a dehydrated cake from the outlet portion. During a process in which the water-containing raw material charged from the inlet portion is conveyed in the direction of the outlet portion by the rotation of the screw cylinder in the filtration tube, the raw material is squeezed so as to reduce the volume, the water content leaks from a dehydration hole of the filtration tube, and the dehydrated raw material is discharged as a dehydrated cake from the outlet portion.

The lower the rotational speed of the screw, the longer the time of squeezing the raw material (chemically modified pulp) and the lower the moisture content of the dehydrated cake discharged from a discharge port. Although the rotational speed of the screw is not particularly limited, it is generally adjusted within a range of 3 to 100 rpm. In addition, the higher a screw compression ratio (a volume ratio of a raw material between an inlet side and an outlet side relative to a screw), the stronger a squeezing force and the lower the moisture content of the dehydrated cake discharged from the discharge port. Although the screw compression ratio is not particularly limited, it is generally adjusted within a range of 1/10 to 1/1. When a pore diameter of a strainer is increased, the squeezing force becomes strong, and the moisture content of the dehydrated cake discharged from the discharge port becomes low. The pore diameter of the strainer can be arbitrarily set on the inlet side, the center, the outlet side, and so on for the raw material, and is generally adjusted within a range of the pore diameter of 0 (blind plate) to 120 mm. When an outlet straight ratio (a value indicating a distance of a concentration portion at the outlet of the raw material) is increased, the squeezing force becomes strong, and the moisture content of the dehydrated cake discharged from the discharge port becomes low. Although the outlet straight ratio is not particularly limited, it is generally adjusted within a range of 1 to 10.

In the present invention, any type of screw press such as a horizontal screw press or a vertical screw press can be used.

In the present invention, it is preferred that the chemically modified pulp is squeezed by a screw press such that a solid content of a dehydrated cake is 5 to 30% by mass. When a solid content of a dehydrated product (dehydrated cake) after the dehydration treatment (squeezing) is less than 5% by mass, it is not possible to sufficiently increase the concentration of the chemically modified pulp, and, at the same time, it is difficult to exclude a catalyst and inorganic salts in the chemically modified pulp. On the other hand, when the solid content concentration exceeds 30% by mass, pulp fibers of the chemically modified pulp are damaged, and good redispersibility cannot be obtained. The time for squeezing the chemically modified pulp with a screw press, that is, the time for the chemically modified pulp to stay in the screw press is not particularly limited, and it is usually about 1 to 120 minutes.

(Production of Cellulose Nanofiber: Defibration/Dispersion Treatment)

A dehydrated product of the chemically modified pulp obtained in the present invention can be used as a raw material for cellulose nanofibers. When the dehydrated product is used as a raw material for cellulose nanofibers, it is preferable to adjust the concentration of the dehydrated product (dehydrated cake) of the chemically modified pulp obtained to an appropriate value, and the prepared dehydrated product (dispersion) is defibrated so that cellulose nanofibers can be obtained. The type of an apparatus used for the defibration treatment is, for example, a high-speed rotary apparatus, a colloid mill type apparatus, a high pressure type apparatus, a roll mill type apparatus, or an ultrasound type apparatus, and in order to efficiently produce a cellulose nanofiber dispersion having high transparency and high fluidity, it is preferable to use a wet high pressure or ultrahigh pressure homogenizer that can perform dispersion process under a pressure condition of 50 MPa or more, preferably 100 MPa or more, more preferably 140 MPa or more.

{Examples}

Next, the present invention will be described in more detail based on examples. The following examples illustrate specific preferred examples of the present invention, and the present invention is not limited at all by these examples.

{Example 1}

<Preparation of Carboxylated (TEMPO Oxidized) Pulp>

To 5000 mL of a solution of 780 mg (5 mmol) of TEMPO (available from Sigma Aldrich) and 7540 mg (50 mmol) of sodium bromide in water was added 50 g (bone dry) of softwood-derived bleached unbeaten craft pulp (available from Nippon Paper Industries Co., Ltd.), and the mixture was stirred until the pulp was homogeneously dispersed. After adding 180 mL of an aqueous sodium hypochlorite solution (active chlorine 5%), the reaction system was adjusted to pH 10.3 with a 0.5 N aqueous hydrochloric acid solution, and an oxidation reaction was started. As the pH in the system decreased during the reaction, a 0.5 N aqueous sodium hydroxide solution was sequentially added to adjust the reaction system at pH 10. After the reaction was continued for 2 hours, the reaction mixture was filtered through a centrifugal dehydrator and thoroughly washed with water to give oxidized pulp. The amount of carboxyl groups in the oxidized pulp was 1.8 mmol/g. A 1% slurry of the oxidized pulp was treated with a screw press so as to have a solid content of 14% by mass.

<Measuring Method of Amount of Carboxyl Groups>

60 mL of a 0.5% by mass slurry (aqueous dispersion) of carboxylated cellulose was prepared and adjusted to pH 2.5 by adding a 0.1 M aqueous hydrochloric acid solution, and then a 0.05 N aqueous sodium hydroxide solution was added dropwise while the electric conductivity was measured until the pH reached 11, and the amount of carboxyl groups was calculated from the amount of sodium hydroxide (a) consumed during the neutralization stage of the weak acid characterized by a slow change in electric conductivity by the equation below:

```
Amount of carboxyl groups [mmol/g carboxylated cellulose] =

a [mL] × 0.05/mass [g] of carboxylated cellulose.
```

<Solid Content Concentration Measuring Method>

5 g of the dehydrated cake was left to stand in a dryer at 105°C for 24 hours, and the solid content concentration of the dehydrated cake was calculated from a change in mass before and after leaving to stand.

<Measuring Method of Amount of TEMPO Remaining in Dehydrated Cake>

The amount of TEMPO remaining in the dehydrated cake was measured using ESR (model number ESR-X 10 SA, available from Keycom Corporation).

<Measuring Method of Amount of Chloride Ion Remaining in Dehydrated Cake>

In the measurement of the amount of chloride ion remaining in the dehydrated cake, a product turned into a 1% slurry by adding ultrapure water was thoroughly stirred and then filtered, and the resultant washing solution was measured using ion chromatography (model number ICS-2000, available from Dionex Corporation).

<Method for Evaluating Redispersibility of Dehydrated Cake>

In the evaluation of the redispersibility of the dehydrated cake, 30 L of water was placed in a 50 L bucket (radius 21 cm), the dehydrated cake was added such that the solid content concentration of a slurry after redispersion was 3%, and after stirring at 100 rpm for 30 minutes with stirring blades (P36 impeller) with a blade outer diameter of 310 mm by using a Satake portable mixer, a remaining state of non-redispersed lumps was visually evaluated.
A: There is no non-redispersed particle.
B: A little amount of non-redispersed particles remains (there is no problem in practical use).
C: A small amount of non-redispersed particles remains (this is not a problem in practical use).
D: Non-redispersed particles remain (it is problematic in practical use).

{Example 2}

The same treatment as described in Example 1 was conducted except that the conditions of the screw press were adjusted such that the solid content was 10% by mass.

{Example 3}

The same treatment as described in Example 1 was conducted except that the conditions of the screw press were adjusted such that the solid content was 18% by mass.

{Example 4}

The same treatment as described in Example 1 was conducted except that the conditions of the screw press were adjusted such that the solid content was 30% by mass.

{Example 5}

<Preparation of Carboxymethylated (CM) Pulp>

In a reactor capable of stirring pulp, 112 g of a 50% by mass aqueous sodium hydroxide solution and 67 g of water were added while stirring 250 g of pulp (LBKP, available from Nippon Paper Industries Co., Ltd.) on a dry mass basis. After stirring at 30°C for 30 minutes, 364g of a 35% by mass sodium monochloroacetate aqueous solution was added with stirring. Thereafter, the mixture was stirred at 30°C for 30 minutes, heated to 70°C for over 30 minutes, and reacted at 70°C for 1 hour. Thereafter, a reaction product was taken out and neutralized and washed to obtain carboxymethylated cellulose (carboxymethylated pulp) having a degree of carboxymethyl substitution of 0.25 per glucose unit. A 1% slurry of the carboxymethylated pulp was treated with a screw press so as to have a solid content of 14% by mass.

<Measuring Method of Degree of Carboxymethyl Substitution per Glucose Unit>

A sample was prepared into a 0.6% by mass slurry and adjusted to pH 2.4 by adding a 0.1 M aqueous hydrochloric acid solution, then a 0.05 N aqueous sodium hydroxide solution was added dropwise while the electric conductivity was measured until the pH reached 11, the amount of carboxyl groups was measured from the amount of sodium hydroxide consumed during the neutralization stage of the weak acid characterized by a slow change in electric conductivity, and a degree of substitution of carboxymethyl group was calculated by the equation below. The term "degree of substitution" used herein refers to the average value of the number of moles of substituent per mol of an anhydrous glucose unit. The following "C" refers to an amount (mol) of carboxymethyl groups per 1 g of pulp.

$$\text{Degree of carboxymethyl substitution} = (162 \times C)/(1 - 58 \times C)$$

{Example 6}

The same treatment as described in Example 5 was conducted except that the conditions of the screw press were adjusted such that the solid content was 5% by mass.

{Example 7}

The same treatment as described in Example 5 was conducted except that the conditions of the screw press were adjusted such that the solid content was 10% by mass.

{Example 8}

The same treatment as described in Example 5 was conducted except that the conditions of the screw press were adjusted such that the solid content was 18% by mass.

{Example 9}

The same treatment as described in Example 5 was conducted except that the conditions of the screw press were adjusted such that the solid content was 22% by mass.

{Comparative Example 1}

Although the same treatment as described in Example 5 was conducted except that the treatment was carried out with a centrifugal separator, it was not possible to obtain the solid content of 3% by mass or more.

{Table 1}

| | Chemical modification | Dehydration apparatus | Dehydrated cake | | | Redispersibility evaluation |
| --- | --- | --- | --- | --- | --- | --- |
| | | | Solid content concentration | Remaining TEMPO amount | Remaining chloride ion amount | |
| | | | % | mg/pulp g | mg/L | |
| Example 1 | Carboxylation | Screw press | 14 | Undetected | 0 | A |
| Example 2 | Carboxylation | Screw press | 10 | Undetected | 0 | A |
| Example 3 | Carboxylation | Screw press | 18 | Undetected | 0 | A |
| Example 4 | Carboxylation | Screw press | 30 | Undetected | 0 | A |
| Example 5 | Carboxymethylation | Screw press | 14 | - | 0 | A |
| Example 6 | Carboxymethylation | Screw press | 5 | - | 5 | A |
| Example 7 | Carboxymethylation | Screw press | 10 | - | 0 | A |
| Example 8 | Carboxymethylation | Screw press | 18 | - | 0 | A |
| Example 9 | Carboxymethylation | Screw press | 22 | - | 0 | B |
| Comparative example 1 | Carboxymethylation | Centrifugal separator | 3 | - | 15 | A |

**Claims**

1.  A method for dehydrating a dispersion of a chemically modified pulp obtained by applying chemical modification treatment to a pulp raw material, the dispersion of the chemically modified pulp being dehydrated by a screw press.

2.  The method for dehydrating a dispersion of a chemically modified pulp according to claim 1, wherein the chemically modified pulp has an amount of a carboxyl group of 0.6 mmol/g to 3.0 mmol/g based on a bone dry mass of the chemically modified pulp.

3.  The method for dehydrating a dispersion of a chemically modified pulp according to claim 1, wherein the chemically modified pulp has a degree of carboxymethyl substitution of 0.01 to 0.50 per glucose unit of cellulose constituting the chemically modified pulp.

4.  The method for dehydrating a dispersion of a chemically modified pulp according to claim 1, wherein the chemically modified pulp has a degree of cation substitution of 0.02 to 0.50 per glucose unit of cellulose constituting the chemically modified pulp.

5.  A process for producing a chemically modified pulp dehydrated product having a solid content of 5 to 30% by mass, which comprises using the method for dehydrating according to any one of claims 1 to 4.

6.  A process for producing a cellulose nanofiber, which comprises using, as a raw material, a chemically modified pulp dehydrated product dehydrated by the method for dehydrating according to any one of claims 1 to 4.

## INTERNATIONAL SEARCH REPORT

| International application No. |
|---|
| PCT/JP2016/083550 |

| A. CLASSIFICATION OF SUBJECT MATTER |
|---|
| *D21C9/18*(2006.01)i, *C08B11/12*(2006.01)i, *D21H11/18*(2006.01)i |

According to International Patent Classification (IPC) or to both national classification and IPC

| B. FIELDS SEARCHED |
|---|
| Minimum documentation searched (classification system followed by classification symbols)<br>D21C9/18, C08B11/12, D21H11/18 |

Documentation searched other than minimum documentation to the extent that such documents are included in the fields searched

| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2014-125690 A (Oji Holdings Corp.),<br>07 July 2014 (07.07.2014),<br>claims; paragraphs [0012], [0018], [0020],<br>[0044], [0063]<br>(Family: none) | 1,2,4,6<br>3,5 |
| Y | JP 2015-514153 A (Stora Enso Oyj),<br>18 May 2015 (18.05.2015),<br>paragraphs [0007], [0040], [0041]<br>& US 2015/0094464 A1<br>paragraphs [0007], [0040], [0041]<br>& WO 2013/150475 A1 | 3 |
| Y | JP 2012-219380 A (Kao Corp.),<br>12 November 2012 (12.11.2012),<br>paragraph [0030]<br>(Family: none) | 5 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 December 2016 (28.12.16) | 17 January 2017 (17.01.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

**INTERNATIONAL SEARCH REPORT**

International application No.

PCT/JP2016/083550

C (Continuation).   DOCUMENTS CONSIDERED TO BE RELEVANT

| Category* | Citation of document, with indication, where appropriate, of the relevant passages | Relevant to claim No. |
|---|---|---|
| Y | WO 2013/121539 A1  (Hokuetsu Kishu Paper Co., Ltd.), <br> 22 August 2013 (22.08.2013), <br> paragraph [0040] <br> & US 2015/0075406 A1 <br> paragraph [0047] <br> & EP 2816006 A1 | 5 |
| A | WO 2006/004012 A1  (Asahi Kasei Corp.), <br> 12 January 2006 (12.01.2006), <br> entire text <br> & US 2007/0207692 A1    & EP 1769836 A1 | 1-6 |
| A | JP 1998-251301 A  (Nippon Paper Industries Co., Ltd.), <br> 22 September 1998 (22.09.1998), <br> entire text <br> (Family: none) | 1-6 |
| A | JP 2010-70686 A  (Fine Clay Co., Ltd.), <br> 02 April 2010 (02.04.2010), <br> entire text <br> (Family: none) | 1-6 |
| A | JP 2004-107503 A  (Terumo Corp.), <br> 08 April 2004 (08.04.2004), <br> entire text <br> (Family: none) | 1-6 |
| A | JP 2015-508112 A  (UPM-Kymmene Corp.), <br> 16 March 2015 (16.03.2015), <br> entire text <br> & US 2014/0374045 A1    & WO 2013/117823 A1 | 1-6 |

Form PCT/ISA/210 (continuation of second sheet) (January 2015)

**EP 3 375 933 A1**

**Patent documents cited in the description**

- JP 2008001728 A